# EUROPÄISCHE PATENTSCHRIFT

(11) **EP 1 303 347 B1**
(45) Veröffentlichungstag und Bekanntmachung des Hinweises auf die Patenterteilung: **28.04.2004**
(21) Anmeldenummer: 01960514.6
(22) Anmeldetag: 18.07.2001
(51) Int. Cl.: B01F 13/10, B01F 15/04

(54) **VERFAHREN UND VORRICHTUNG ZUR AUTOMATISIERTEN HERSTELLUNG UND CHARAKTERISIERUNG VON FLÜSSIGEN MEHRKOMPONENTENSYSTEMEN**
METHOD AND DEVICE FOR CARRYING OUT THE AUTOMATED PREPARATION AND CHARACTERIZATION OF LIQUID MULTI-CONSTITUENT SYSTEMS
PROCEDE ET DISPOSITIF PERMETTANT LA PRODUCTION ET LA CARACTERISATION AUTOMATIQUE DE SYSTEMES LIQUIDES A PLUSIEURS COMPOSANTES

(30) Priorität: 18.07.2000 DE 10034890; 14.11.2000 DE 10056389
(43) Veröffentlichungstag der Anmeldung: 23.04.2003
(73) Patentinhaber: BASF AKTIENGESELLSCHAFT, 67056 Ludwigshafen (DE)
(72) Erfinder: BECKER, Dietmar, 68542 Heddesheim (DE); BECK, Georg, 67482 Böbingen (DE); BENTZ, Stefan, 67059 Ludwigshafen (DE); BEST, Wolfgang, 67251 Freinsheim (DE); ERK, Peter, 67227 Frankenthal (DE); ETZRODT, Günter, 70180 Stuttgart (DE); KÖNEMANN, Martin, 68163 Mannheim (DE); RIEGER, Reinhold, 67165 Waldsee (DE); UNTERFORSTHUBER, Klaus, 67125 Dannstadt-Schauernheim (DE)
(74) Vertreter: Isenbruck, Günter, Dr.
(86) Internationale Anmeldenummer: PCT/EP2001/008315
(87) Internationale Veröffentlichungsnummer: WO 2002/005939

(56) Entgegenhaltungen:
- EP-A- 0 316 766
- EP-A- 0 602 737
- EP-A- 0 882 496
- EP-A- 0 907 083
- WO-A-91/16675
- US-A- 5 003 500
- PATENT ABSTRACTS OF JAPAN vol. 014, no. 231 (M-0974), 16. Mai 1990 (1990-05-16) & JP 02 060800 A (NIPPON PAINT CO LTD), 1. März 1990 (1990-03-01)

## Beschreibung

Die vorliegende Erfindung betrifft ein Verfahren und eine Vorrichtung zur automatisierten Herstellung und Charakterisierung von flüssigen Mehrkomponentensystemen aus wenigstens zwei, bevorzugt wenigstens drei Komponenten von denen mindestens eine Komponente eine Pigment-Dispersion ist.

Bei der Entwicklung von Flüssigformulierungen, wie Dispersionen, Emulsionen oder Lösungen, werden diese Screeningtests unterworfen, um sie im Hinblick auf ihre Wirkung und Stabilität zu optimieren. Hierzu werden die Formulierungen zuerst manuell hergestellt und anschließend manuell vermessen. Dies ist sehr aufwendig und damit zeit- und kostenintensiv, insbesondere wenn die Formulierungszusammensetzungen gleichzeitig variiert werden.

Der Erfindung lag daher die Aufgabe zugrunde, ein Verfahren und eine Vorrichtung zu schaffen, die ein zuverlässiges und schnelleres Screening von flüssigen Mehrkomponentensystemen, die wenigstens eine Pigment-Dispersion aufweisen, bei gleichzeitiger Variation der Formulierungszusammensetzung erlauben.

Zur Lösung dieser Aufgabe wird ein Verfahren vorgeschlagen, das mehrere automatisierte Schritte zur Herstellung und zum Screening der Mehrkomponentensysteme umfaßt, sowie eine Vorrichtung, die die dazu erforderlichen Elemente aufweist. Zwar wurde die Verwendung automatisierter Methoden zur Entdeckung neuer Materialien, Katalysatoren und Wirkstoffe kürzlich neu zusammengefaßt, siehe hierzu beispielsweise B. Jandeleit, D.J. Schäfer, T.S. Powers, H.W. Turner, W.H. Weinberg, Angewandte Chemie Int. Ed. England, 1999, 38, 2494 bis 2523 oder E.W. McFarland, W.H. Weinberg, Tibtech, 1999, 17, 107 bis 115, jedoch ist die Verwendung automatisierter Methoden zum Screening von Pigment-Dispersions haltigen Flüssigformulierungen nicht bekannt.

Die Patent schritten EP-A 031766, EP-A 0602737 und EP-A 0907083 zeigen automatisierte Vorrichtungen und Verfahren, die sich auf die Herstellung von flüssigen Mehrkomponentensystemen beziehen, jedach micht auf Pigment-Dispersionen.

Somit betrifft die Erfindung ein Verfahren und eine Vorrichtung zur automatisierten Herstellung und Charakterisierung wenigstens einer Pigment-Dispersion aus wenigstens zwei, bevorzugt wenigstens drei Komponenten, deren Merkmale in den unabhängigen Ansprüchen 1 und 8 spezifiziert sind.

Ferner sieht die Erfindung die Verwendung des erfindungsgemäßen Verfahrens oder der erfindungsgemäßen Vorrichtung zur automatisierten Herstellung und Charakterisierung wenigstens einer Pigment-Dispersion aus wenigstens zwei, bevorzugt wenigstens drei Komponenten vor. Bevorzugte Ausführungsformen der Erfindung sind in der Beschreibung, den Beispielen, der Figur und den Unteransprüchen aufgeführt.

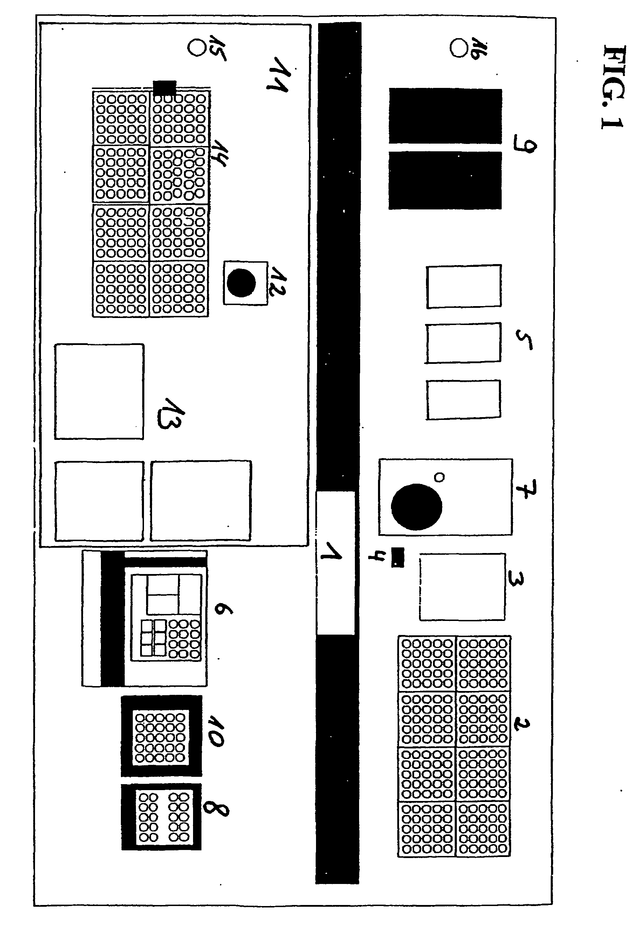

Die Figur 1 zeigt eine erfindungsgemäß bevorzugte Vorrichtung zum automatischen Screening von flüssigen Pigment-Dispersions formulierungen.

Erfindungsgemäß enthält das flüssige Pigment-Dispersionssystem wenigstens zwei, bevorzugt wenigstens drei Komponenten. Die Anzahl der Komponenten hängt von der jeweiligen Formulierung ab. Vorteilhafterweise liegen 3 bis 10, insbesondere 4 bis 8, Komponenten vor, es können aber auch mehr oder im Falle von Pigment-Dispersionen auch weniger sein. Vorzugsweise handelt es sich bei den wenigstens drei Komponenten um wenigstens (1) eine Flüssigkeit, wenigstens (2) einen in der Flüssigkeit unlöslichen, festen oder flüssigen Stoff und wenigstens (3) einen grenzflächenaktiven Stoff. In der Flüssigkeit unlöslicher Stoff bedeutet vorliegend, daß sich der Stoff überhaupt nicht oder höchstens bis zu 10 Gew.-% in der Flüssigkeit löst. Üblicherweise liegt das Mehrkomponentensystem als Dispersion, Emulsion, flüssiges Mehrphasensystem oder Lösung vor.

Gemäß dem Stand der Technik wird die Charakterisierung von Bunt-Pigmenten in Anstrichmitteln durch manuelles Einwiegen von Pigment, Rohlack, Mahlkörpern, gegebenenfalls weiteren Additiven und anschließendes Dispergieren der Pigmente mit Hilfe einer Kugelmühle oder eines Dispergieraggregats durchgeführt. Zur Bestimmung der anwendungstechnischen Eigenschaften der Pigmente werden die Pigmentdispersionen manuell appliziert, was sehr aufwendig und damit zeit- und kostenintensiv ist. Die Lasur bzw. Transparenz transparenter Pigmente kann durch nichtdeckende Ausfärbungen über Schwarz-Weiß-Kontrast oder durch deckende Ausfärbung einer TiO₂- bzw. Rußabmischung und Ausstreichen beurteilt werden.

Die Farbstärke sowie Lasur, das Streuvermögen, der Bunttonwinkel, die Buntheit, die Helligkeit und die Transparenz bzw. das Deckvermögen werden ebenfalls aus der TiO₂-Abmischung bestimmt. In der Regel werden Remissionsspektren der manuell applizierten Lackfilme gemessen, wie es etwa in H. G. Völz Industrielle Farbprüfung VCH Weinheim, 1990 beschrieben ist.

Eine optimierte Lackformulierung bzw. Pigmentformulierung erhielt man bislang nur durch viele zeitaufwendige kostenintensive Testläufe. Dabei bleibt es allerdings unklar, ob es sich bei dem letztlich gefundenen Optimum um ein absolutes oder ein lokales Optimum handelt, da eine systematische und parallel durchgeführte Untersuchung des in Betracht kommenden Parameterraums wegen des viel zu großen Aufwands nicht möglich ist.

Die Anstrichmittelmittelbranche kennt zu Produktionszwecken automatisierte Apparaturen zur Farbtonausarbeitung, in denen jedoch keine Pigment-Dispergierung, sondern lediglich eine Mischung pigmenthaltiger Pasten erfolgt, wie es etwa in R. Huhn, Farbe und Lack, 1999, 9, 102 bis 104 beschrieben wird.

Die Verwendung automatisierter Methoden zur Entdeckung neuer Materialien, Katalysatoren und Wirkstoffe wurde kürzlich neu zusammengefaßt, siehe hierzu beispielsweise B. Jandeleit, D. J. Schaefer, T. S. Powers, H. W. Turner, W. H. Weinberg, Angewandte Chemie Int. Ed. engl., 1999, 38, 2494 bis 2523 oder E. W. McFarland, W. H. Weinberg, Tibtech, 1999, 17, 107 bis 115.

Es gibt bisher kein Verfahren, welches ermöglicht, die anwendungstechnischen Eigenschaften der Coloristik und Rheologie von dispergierten Pigmenten in fluiden Medien automatisiert zu erfassen.

Eine weitere Aufgabe der vorliegenden Erfindung war es nun, ein Verfahren und eine Vorrichtung bereitzustellen, mit deren Hilfe es möglich ist, vorzugsweise simultan eine Mehrzahl von Dispersionen, insbesondere von Pigment-Dispersionen automatisiert zu formulieren und zu charakterisieren, insbesondere deren Coloristik und Rheologie zu charakterisieren.

Gelöst wird diese Aufgabe durch das erfindungsgemäße Verfahren, wobei das automatisierte Herstellen des Gemisches in Schritt (a) durch automatisiertes Einwiegen mindestens eines Pigments und von mindestens einem Lack in mindestens ein Gefäß erfolgt und das automatisierte Homogenisieren in Schritt (b) durch automatisiertes Schütteln erfolgt, so daß eine Pigment-Dispersion entsteht und das automatisierte Vermessen in Schritt (c) durch farbmetrisches Vermessen erfolgt, wobei zusätzlich die folgenden Schritte durchgeführt werden:
- automatisiertes Schließen vor dem automatisierten Schütteln in Schritt (b),
- automatisiertes Öffnen des mindestens einen Gefäßes und automatisiertes Entnehmen einer definierten Menge der Pigment-Dispersion vor dem automatisierten Vermessen in Schritt (c),
- gegebenenfalls automatisiertes homogenes Mischen der definierten Menge der Pigment-Dispersion mit einer Weiß-/Schwarz-Paste.

Des weiteren wird die Aufgabe durch die erfindungsgemäße Vorrichtung gelöst, wobei die Meßstation (D) ein Farbmetrik-Gerät ist und die Vorrichtung zusätzlich wenigstens die folgenden Elemente aufweist:
- eine Einwiegestation, die der Dosierstation (A) vorgeschaltet ist,
- eine Dispergierstation, die der Schließstation (B) nachgeschaltet ist,
- eine Entnahme-, insbesondere eine Pipettierstation, die der Dispergierstation nachgeschaltet ist,
- eine weitere Schließstation, die der Entnahmestation nachgeschaltet ist.

In einer bevorzugten Ausführungsform des Verfahrens zur Herstellung eines flüssigen Mehrkomponentensystems aus wenigstens drei Komponenten, wenigstens (1) einer Flüssigkeit, wenigstens (2) einem in der Flüssigkeit unlöslichen, festen oder flüssigen Stoff und wenigstens (3) einem grenzflächenaktiven Stoff, handelt es sich bei der Flüssigkeit (1) vorteilhafterweise um ein Lösungsmittel, insbesondere Wasser und/oder ein organisches Lösungsmittel, das polar oder unpolar sein kann, z.B. Alkohole wie Ethanol, Methanol, mehrwertige Alkohole wie Glycerin oder Polyole, organische Lösungsmittel wie z.B. Xylol, Toluol, Essigsäureethylester, Tetrahydrofuran, Rapsölmethylester, Paraffine und/oder Kohlenwasserstoffgemische. Bevorzugte Lösungsmittel sind Wasser oder ein Wasser-Ethanol-Gemisch. Bei dem in der Flüssigkeit unlöslichen Stoff (2) handelt es sich beispielsweise um pharmazeutische Wirkstoffe, Pflanzenschutzwirkstoffe (Herbizide, Insektizide, Fungizide), Nutraceuticals, z.B. Vitamine, Farbstoffe und/oder Pigmente, z.B. für Papier, Haare oder Leder; in (1) nicht lösliche organische Lösungsmittel, beispielsweise wie sie oben definiert wurden; synthetische oder natürliche Wachse, z.B. Bienenwachs, Wollwachs; synthetische, pflanzliche oder tierische Öle, z.B. Paraffinöl, Rapsöl, Sojaöl, Fichtennadelöl, Rosmarinöl, Erdnußöl, Jojobaöl, Kokosnußöl, Mandelöl, Olivenöl, Palmöl, Rizinusöl, Weizenkeimöl, Isopropylmyristat, oder etherische Öle, z.B. Latschenkieferöl, Lavendelöl, Rosmarinöl, Kiefernnadelöl, Eukalyptusöl, Pfefferminzöl, Salbeiöl, Bergamottöl, Terpentinöl, Melissenöl, Wacholderöl, Zitronenöl, Anisöl, Kardamonöl, Kampferöl; in (1) unlösliche Polymere, z.B. Wirkstoffe in kosmetischen Produkten (beispielsweise Haut- und Haarpflegemittel); Spezial- und Prozeßchemikalien, wie z.B. Entschäumer, Hydrophobiermittel für Textil und/oder Leder, Papierleimungsmittel, Korrosionsinhibitoren, Kraftstoffadditive, Komplexbildner, Antioxidantien, Bleichmittel, Enzyme, Stabilisatoren, z.B. UV-Stabilisatoren, Biozide, Block- und statistische Copolymere. Bei dem grenzflächenaktiven Stoff (3) handelt es sich beispielsweise um Lösungsvermittler, Tenside, Cotenside, Hydrotrope, Schutzkolloide wie Polyvinylpyrrolidon, allgemein neutrale, kationische, anionische und betainische Dispergiermittel wie Polyacrylate, Polyacrylsäure und deren Salze, Maleinsäure/Acrylsäure-Copolymerisate, Naphthalin-Formaldehyd-Kondensate, Naphthalinsulfonsäure-Kondensate, Phenolsulfonsäurekondensate, neutrale und kationisierte Stärke, Polyvinylalkohol, Polyethylenimin und Polyvinylamin sowie modifizierte Produkte davon, Emulgatoren und/oder Verdickungsmittel, insbesondere um anionische, nichtionische, kationische oder amphotere Tenside, z.B. Alkylpolyglycoside, Fettalkoholsulfate, Fettalkoholethersulfate, Alkansulfonate, Fettalkoholethoxylate, Fettalkoholalkoxylate, Fettalkoholphosphate, Fettalkoholethersulfonate, Alkylbetaine, Sorbitanester, alkoxylierte Sorbitanester, Zuckerfettsäureester, Fettsäurepolyglycerinester, Fettsäurepartialglyceride, Fettsäurecarboxylate, Fettalkoholsulfosuccinate, Fettsäuresarcosinate, Fettsäureisethionate, Fettsäuretaurinate, Zitronensäureester, Silikon-Polymere, Silikon-Copolymere und/oder Fettsäurepolyglykolester. Die genaue Zusammensetzung des Mehrkomponentensystems richtet sich nach dem Anwendungsbereich. Geeignete Anwendungsbereiche sind weiter unten genannt. Eine typische Dispersion hat z.B. die folgende Zusammensetzung:

| Gew.-% | Stoff | Flüssig/Fest (Schmelzpunkt) |
|---|---|---|
| 10 bis 20 | wasserunlösliches Wachs | Schmelzpunkt 40 bis 100°C |
| 69,8 bis 89,6 | Wäßriges Schutzkolloid (1 bis 6%ig) | Flüssig |
| 0,1 | Propionsäure | Flüssig |
| 0,1 | Formaldehyd | Flüssig |
| 0,1 bis 5 | Additiv X | Flüssig |
| 0,1 bis 5 | Additiv Y | Fest |

Die Lösung des Schutzkolloids enthält hierbei 1 bis 6 Gew.-% Schutzkolloid, der Rest ist Wasser. Bei den Additiven X und Y kann es sich um Emulgatoren oder Dispergiermittel handeln. Eine weitere typische Formulierung hat folgende Zusammensetzung: 30 Gew.-% synthetisches oder pflanzliches Öl, z.B. Isopropylmyristat; 0,1 bis 5 Gew.-% Emulgator X; 0,1 bis 5 Gew.-% Emulgator Y; und Rest Wasser. Bei Emulgator X und Y handelt es sich um übliche Emulgatoren.

In Schritt (a) des erfindungsgemäßen Verfahrens wird automatisiert ein Gemisch hergestellt, indem wenigstens zwei, bevorzugt wenigstens drei Komponenten in einem Gefäß zusammengebracht werden, wobei wenigstens eine Komponente automatisiert in das Gefäß eindosiert wird. Bei dem Gefäß handelt es sich zweckmäßigerweise um ein Glas oder Fläschchen mit Schraubverschluß oder Schnappverschluß, bevorzugt mit einem Volumen von 1 bis 50 ml. Die Art des Zusammenbringens unterliegt hierbei keiner Beschränkung, soweit sie automatisiert durchgeführt werden kann. Das Zusammenbringen der Komponenten kann durch Vorlegen einer oder mehrerer Komponenten, insbesondere einer Komponente; automatisches Eindosieren einer oder mehrerer Komponenten; und/oder automatisches Entnehmen, insbesondere Pipettieren, einer oder mehrerer Komponenten aus einem oder mehreren Vorratsbehältern erfolgen. In einer bevorzugten Ausgestaltung der Erfindung liegt in Schritt (a) das Gefäß leer vor und wenigstens eine Komponente wird in einer definierten Menge automatisiert aus einem Vorratsbehälter in das leere Gefäß pipettiert oder dosiert.

In einer besonders bevorzugten Ausführungsform wird das Zusammenbringen der Komponenten in dem Gefäß mittels mindestens eines geeigneten Roboters durch- geführt. Es ist auch möglich, daß Dosier-, Pipettier- und/oder Verdünnungsschritte parallel für mehrere Proben gleichzeitig durchgeführt werden.

In der bevorzugten Ausführungsform des erfindungsgemäßen Verfahrens zur Herstellung von Pigment-Dispersionen erfolgt das automatisierte Herstellen des Gemisches in Schritt (a) durch automatisiertes Einwiegen mindestens eines Pigments und von mindestens einem Lack in mindestens ein Gefäß.

Als Lack wird vorzugsweise ein lösungsmittelhaltiger Lack, wie beispielsweise ein CAB-Lack oder ein Alkydmelamin-Lack oder ein wässriger Lack eingesetzt.

Vorzugsweise werden gleichzeitig verschiedene Pigmente mit dem mindestens einen Lack in verschiedene, zusammen ein Raster bildende Gefäße eingewogen.

In einer anderen bevorzugten Vorgehensweise wird das mindestens eine Pigment mit verschiedenen Lacken in verschiedene, zusammen ein Raster bildende Gefäße eingewogen.

In einer weiteren bevorzugten Ausführungsform des Verfahrens zur Herstellung von Pigment-Dispersionen wird die mindestens eine Pigmentformulierung in verschiedenen Dosierungen mit dem mindestens einen Lack in verschiedene, zusammen ein Raster bildende Gefäße eingewogen. Besonders bevorzugt wird das Einwiegen der Pigmentformulierungen, der unpigmentierten Lacke und der Mahlkörper mittels mindestens eines geeigneten Roboters durchgeführt.

In Schritt (b) wird das in Schritt (a) erhaltene Gemisch automatisiert homogenisiert, um das flüssige Mehrkomponentensystem zu erhalten. Die Durchführung des Homogenisierens unterliegt dabei keiner Beschränkung, soweit eine automatisierte Durchführung möglich ist. Vorzugsweise erfolgt das Homogenisieren durch Ultraturrax, Ultraschalldispergieren und/oder Rütteln. Wird ein Rütteln durchgeführt, so wird das Gefäß vor dem Rütteln automatisiert verschlossen, während bei Ultraschalldispergierung oder Ultraturrax das Gefäß nachher automatisiert verschlossen wird. Vorzugsweise erfolgt das Verschließen mittels eines geeigneten Roboters. Vorteilhafterweise kann die Homogenisierzeit automatisch steuerbar geändert und eingestellt werden. Je nach Homogenisierverfahren können auch mehrere Proben parallel homogenisiert werden.

In einer weiteren vorteilhaften Ausgestaltung der Erfindung wird nach Schritt (b) und vor Schritt (c), oder nach Schritt (a) und vor Schritt (b) das flüssige Mehrkomponentensystem automatisiert temperiert und/oder abgekühlt, wobei gegebenenfalls gleichzeitig vermischt, beispielsweise geschüttelt, werden kann. Zweckmäßigerweise ist hierbei die Temperieroder Abkühlzeit automatisch steuerbar und einstellbar. Es können auch mehrere Proben parallel temperiert und/oder abgekühlt werden. Eine Temperierung und/oder Abkühlung des Mehrkomponentensystems auf eine bestimmte Temperatur über einen definierten Zeitraum erlaubt die Durchführung von Lagertests.

In der bevorzugten Ausführungsform des erfindungsgemäßen Verfahrens zur Herstellung von Pigment-Dispersionen erfolgt das automatisierte Homogenisieren in Schritt (b) durch automatisiertes Schütteln, so daß eine Pigment-Dispersion entsteht. Vor dem automatisierten Schütteln in Schritt (b) erfolgt ein automatisiertes Schließen des mindestens einen Gefäßes.

Vorzugsweise wird das mindestens eine Gefäß mittels eines Roboters geschlossen.

Weiterhin vorzugsweise wird das geschlossene Gefäß von dem Roboter zum automatisierten Schütteln in eine Dispergiervorrichtung, vorzugsweise ein Dispergieraggregat, besonders bevorzugt ein Skandex-Dispergieraggregat gegeben.

Vorzugsweise kann die Dispergierzeit automatisch steuerbar geändert und eingestellt werden. Je nach Dispergierzeit ergeben sich Dispersionen mit unterschiedlicher Teilchengrößenverteilung und somit auch mit unterschiedlichen Eigenschaften, insbesondere unterschiedlichen coloristischen Eigenschaften.

Nach der Durchführung des Schrittes (b), ist es möglich, über das Fließverhalten der Pigment-Dispersion die kolloidale Stabilität derselben zu bestimmen.

In Schritt (c) wird das flüssige Mehrkomponentensystem automatisiert vermessen. Falls es die Meßmethode erfordert, wird vor Schritt (c) das Gefäß automatisiert geöffnet, und falls erforderlich, nach Beendigung der Messung wieder verschlossen, was jeweils mittels eines Roboters erfolgen kann. Vorzugsweise erfolgt das Vermessen durch Meßmethoden zur automatisierten Bestimmung von Formulierungseigenschaften, wie Stabilität, Viskosität, Homogenität, Phasenverhalten, Partikelgröße und Partikelgrößenverteilung, Gesamtkonzentration, Feststoffgehalt, Schaumverhalten, Trübungspunkt, Konzentrationen der Komponenten, Koagulatgehalt, Stabilität gegen Wasserhärte und/oder chemische Eigenschaften wie die Bestimmung funktioneller Gruppen der Komponenten. Besonders bevorzugt erfolgt das Vermessen durch automatisierte Viskositätsmessungen, Transmissions- und Remissionsmessungen, Partikelgrößenmessungen, akustische Verfahren wie z.B zur Bestimmung von Teilchengrößen oder dem Luftgehalt, spektroskopische Verfahren wie Raman-, NIR- und/oder IR-Spektrometrie und/oder Bildanalyse für eine Homogenitätsprüfung. Am bevorzugtesten erfolgt das Vermessen durch wenigstens ein Meßverfahren ausgewählt aus automatisierter Viskositätsmessung, Partikelgrößenmessung, Transmissionsund/oder Remissionsmessung und/oder Bildanalyse für eine Homogenitätsprüfung. Dabei können eine Untersuchung oder mehrere Untersuchungen nacheinander durchgeführt werden. Bei Bedarf werden die Gefäße zwischen den einzelnen Messungen geöffnet oder verschlossen. Die Meßsysteme, z.B. der Rotationskörper des Rheometers, werden bei Bedarf automatisch gereinigt. Die Viskositätsmessung kann mit jedem Viskosimeter durchgeführt werden, beispielsweise einem Rotationsviskosimeter. Die Homogenität wird über eine Bildanalyse mit verschiedenen Helligkeitsstufen bestimmt. Zur Bestimmung von Aufrahmungen, Sedimentationen oder Konzentrationsgefällen von Formulierungen, z.B. Emulsionen oder Dispersionen, werden Transmissions- oder Remissionsmessungen mittels Laserstrahl angewandt, die an unterschiedlichen Höhen des Probengefäßes durchgeführt werden. Zur Bestimmung der Trübung einer Lösung oder einer Mikroemulsion wird ebenfalls die Transmission oder Remission gemessen. Die Partikelgrößenbestimmung wird durch Lichtbeugung oder Lichtstreuung durchgeführt. Zum Vermessen wird in einer bevorzugten Ausführungsform das Mehrkomponentensystem mittels eines Roboters zum Meßort gebracht.

Soweit es für ein Meßverfahren erforderlich ist, wird eine Probe des Mehrkomponentensystems vorher aus dem Gefäß automatisiert entnommen, bevorzugt mittels Pipettieren. Zweckmäßigerweise ist die zur Messung verwendete Meßstation oder Apparatur modular aufgebaut, was ein Austauschen der verschieden Meßverfahren in Abhängigkeit von der Meßaufgabe erlaubt.

In der Ausführungsform des erfindungsgemäßen Verfahrens zur Herstellung von Pigment-Dispersionen erfolgt vor dem automatisierten Vermessen in Schritt (c) ein automatisiertes Öffnen des mindestens einen Gefäßes.

Das automatisierte Öffnen wird vorzugsweise ebenfalls mittels eines Roboters ausgeführt.

Anschließend erfolgt ein automatisiertes Entnehmen einer definierten Menge der Pigment-Dispersion.

Vorzugsweise wird auch hier ein geeigneter Roboter eingesetzt, welcher mittels einer Entnahmeeinheit, vorzugsweise einer Spritze, die gewünschte Menge an Pigment-Dispersion entnimmt. Um beim Ansaugen der Bunt-Paste bzw. der Pigment-Dispersion zu vermeiden, den Spritzeneingang zu verstopfen, wird vorzugsweise eine Einwegspritze nur jeweils 2 bis 4 mm eingetaucht, wobei die Eintauchtiefe vorzugsweise durch eine Entfernungsmessung durch Ultraschall gewährleistet wird.

Vorzugsweise wird die auf diese Weise entnommene Bunt-Paste gleichzeitig auch mittels einer geeigneten Waage gewogen.

Das automatisierte Vermessen in Schritt (c) erfolgt in dem Verfahren zur Herstellung von Pigment-Dispersionen durch farbmetrisches Vermessen.

Vorzugsweise erfolgt das farbmetrische Vermessen durch Aufnehmen mindestens eines Remissionsspektrums, wobei die Messung des Remissionsspektrums vorzugsweise aus einer Entfernung von 0,1 bis 5 cm direkt auf die flüssige Pigment-Dispersion erfolgt.

In Schritt (d) erfolgt die Auswertung der in Schritt (c) erhaltenen Ergebnisse. Zweckmäßigerweise erfolgt dies mittels einer geeigneten Software, wobei gegebenenfalls das Vermessen abgebrochen wird, sobald wenigstens eine Meßmethode das flüssige Mehrkomponentensystem als ungeeignet charakterisiert. Die Auswertung kann auch eine Dokumentation der Formulierungszusammensetzung, des Herstellungsablaufs und der Meßergebnisse umfassen.

In der Ausführungsform des erfindungsgemäßen Verfahrens zur Herstellung von Pigment-Dispersionen, worin das Vermessen durch farbmetrisches Vermessen, vorzugsweise durch Aufnehmen mindestens eines Remissionsspektrums erfolgt, erfolgt die Auswertung des aufgenommenen Remissionsspektrums mittels einer geeigneten Farbmetrik-Software, wobei hier vorzugsweise unter anderem mindestens eine der folgenden farbmetrischen Kenngrößen bestimmt wird:
dH (δ-Bunttonwinkel), dL (δ-Helligkeit), dC (δ-Buntheit), ddE (δ-Lasur), FAE (Farbstärke/Farbäquivalent).

Diese Kenngrößen geben Aussagen über die kolloide Stabilität, die Teilchengröße der Partikel in Dispersion und über die Dispergierbarkeit.

Dabei wird vorzugsweise das Farbäquivalent FAE zu einer Vergleichsprobe und die Dispergierbarkeit bestimmt.

Vorzugsweise werden die farbmetrischen Werte der Vergleichsprobe ebenfalls mittels des beschriebenen erfindungsgemäßen Verfahrens bestimmt.

In einer bevorzugten Ausführungsform des erfindungsgemäßen Verfahrens zur Herstellung von Pigment-Dispersionen erfolgt nach dem automatisierten Entnehmen einer definierten Menge der Pigment-Dispersion vor dem Vermessen in Schritt (c) ein automatisiertes homogenes Mischen der definierten Menge der Pigment-Dispersion mit einer Weiß-/Schwarz-Paste. Das Homogenisieren mit der Weiß-/Schwarz-Paste kann vorzugsweise auf zwei verschiedene Weisen erfolgen.

In einer bevorzugten Ausführungsform des erfindungsgemäßen Verfahrens zur Herstellung von Pigment-Dispersionen wird in einem Gefäß eine definierte Weiß-/Schwarz-Paste vorgelegt, die Bunt-Paste bzw. die definierte Menge an Pigment-Dispersion aus der Spritze zudosiert und durch Schütteln eine homogene Paste erzeugt.

In einer anderen bevorzugten Ausführungsform wird sowohl die Bunt-Paste bzw. die definierte Menge an Pigment-Dispersion als auch die Weiß-/Schwarz-Paste in definierten Mengen in Einwegspritzen aufgezogen und beide Spritzen mit einem Bauchstückschlauch verbunden. Durch Hin- und Herbewegung der Spritzenkolben werden die Pasten homogenisiert; die Spritzenkolben bewirken, daß die an Innenwänden der Spritze befindliche Paste vollständig homogenisiert wird. Die Schwarz-/Weiß-Paste umfaßt 2 bis 40 % TiO₂ oder Ruß.

In einer weiteren bevorzugten Ausführungsform des erfindungsgemäßen Verfahrens zur Herstellung von Pigment-Dispersionen werden in Schritt (a), das heißt beim automatisierten Einwiegen des mindestens einen Pigments und von mindestens einem Lack in mindestens einem Gefäß ein oder mehrere Mahlkörper mit eingewogen.

Vorzugsweise verwendet man als Mahlkörper beispielsweise kleine Glaskugeln, SAZ-Kugeln oder Stahlkugeln. Mittels dieser Mahlkörper erreicht man eine bessere und schnellere anwendungstechnisch relevante Dispergierung, da hierdurch ein erheblicher Eintrag von mechanischer Energie in das System erfolgt.

Ferner wird in einer weiteren bevorzugten Ausführungsform des erfindungsgemäßen Verfahrens zur Herstellung von Pigment-Dispersionen beim automatisierten Einwiegen des mindestens einen Pigments und des mindestens einen Lacks in das mindestens eine Gefäß noch mindestens ein oder mehrere Additive mit eingewogen. Mittels dieser Additive kann eine Stabilisierung der kolloidalen Pigment-Partikel in dem mindestens einen Lack erreicht werden. Beispielsweise durch Aufrechterhaltung eines sterischen Abstandes oder über entsprechende elektrische Ladung.

Als Additive sind alle oberflächenaktive Substanzen denkbar, unter anderem Tenside, Polymere, Pigmentderivate. Sie wirken dabei als Entschäumer, Entlüfter, Netzmittel, Dispergiermittel und/oder als Verlaufsadditive und/oder als Rheologieverbesserer.

Ferner stellt die Erfindung eine Vorrichtung bereit, wie sie oben definiert ist. Als Dosierstation sind Dosimaten, Schlauchpumpen und/oder Dosierstationen für Schmelzen mit einer Temperatur bis zu 300 °C geeignet. Die zudosierte Menge kann über eine Waage kontrolliert oder gesteuert werden. Als Schließstation eignen sich insbesondere eine Schraubstation mit Deckelspender. Bei der Homogenisierstation handelt es sich vorzugsweise um einen Ultraturrax, einen Ultraschalldispergierer, einen Rüttler/Schüttler oder einen Mischer. Auch eine Kombination von zwei oder mehreren dieser Geräte ist möglich. Bei der Meßstation handelt es sich vorzugsweise um Geräte, die zur Bestimmung der obengenannten Formulierungseigenschaften, beispielsweise kolloidaler Eigenschaften der Formulierungen, geeignet sind. Typische Messstationen sind z.B. Rheometer, Trübungsmeßgeräte, Meßgeräte zur Bestimmung der Transmission und/oder Remission, Apparaturen zur Bildanalyse, Ramanspektrometer, NIR-Spektrometer, IR-Spektrometer und/oder Partikelgrößenmeßgeräte. Es können auch zwei oder mehrere der genannten Geräte eingesetzt werden. Besonders bevorzugt ist eine Apparatur zur Bestimmung von Rheologieeigenschaften, eine Apparatur zur Transmissions- und/oder Remissionsmessung, eine Apparatur zur Partikelgrößenmessung und/oder eine Apparatur zur Bildanalyse für eine Homogenitätsprüfung.

In einer bevorzugten Ausführungsform der Erfindung weist die Vorrichtung zusätzlich wenigstens noch eines der folgenden Elemente auf:
(A') eine Pipettierstation;
(C') eine Temperier- und/oder Abkühlstation, gegebenenfalls mit Misch-und/oder Schüttelvorrichtung; und
(F) einen Roboter.

Eine weitere bevorzugte Ausführungsform der erfindungsgemäßen Vorrichtung betrifft eine Vorrichtung zur automatisierten Herstellung und Charakterisierung von mindestens einer Dispersion, insbesondere mindestens einer Pigmentdispersion, wobei die Meßstation (D) ein Farbmetrik-Gerät ist und die Vorrichtung zusätzlich wenigstens die folgenden Elemente aufweist:
- eine Einwiegestation, die der Dosierstation (A) vorgeschaltet ist,
- eine Dispergierstation, die der Schließstation (B) nachgeschaltet ist,
- eine Entnahme-, insbesondere eine Pipettierstation, die der Dispergierstation nachgeschaltet ist,
- eine weitere Schließstation, die der Entnahmestation nachgeschaltet ist.

Vorzugsweise weist die erfindungsgemäße Vorrichtung zur Herstellung und Charakterisierung von Pigment-Dispersionen noch mindestens eines der folgenden Elemente auf:
- eine Dosierstation für Mahlkörper,
- eine Dosierstation für feste und/oder flüssige Additive,
- eine Roboter,
- eine Dosierstation für Weiß-/Schwarz-Pasten.

Vorzugsweise erfolgt die Anordnung der einzelnen Elemente bzw. der einzelnen Geräte in der folgenden Weise:

In einer Einwiegestation, vorzugsweise für pulverförmige Pigmente, und einer nachgeschalteten Dosierstation für Mahlkörper werden definierte Gemische von Mahlkörpern und pulverförmigen Pigmenten erzeugt. In einer nachgeschalteten Dosierstation für feste bzw. flüssige Additive können gewünschte Additive zugesetzt werden. In einer anschließend folgenden Dosierstation vorzugsweise für nicht-pigmentierte Rohlacke wird ein entsprechender Rohlack zugegeben.

In einer sich anschließenden Schließ- vorzugsweise Schraubstation wird vorzugsweise mittels eines geeigneten Roboters das das Gemisch enthaltende Gefäß geschlossen und vorzugsweise mittels eines Roboters einem Dispergieraggregat vorzugsweise einem Skandex-Dispergieraggregat zugeführt. In dem Dispergieraggregat wird durch Schütteln eine Pigment-Dispersion erzeugt. Vorzugsweise können hierbei gleichzeitig mehrere, verschiedene Mischungen enthaltende Gefäße, die zusammen ein Raster bilden, parallel geschüttelt und somit gleichzeitig verschiedene Pigment-Dispersionen erzeugt werden.

Nach einer einstellbaren und variablen Dispergierzeit werden die Pigment-Dispersionen und die Mahlkörper enthaltenden Gefäße aus dem Dispergieraggregat vorzugsweise mittels eines Roboters herausgenommen und in einer geeigneten Entnahmestation geöffnet. In einer entsprechenden Entnahme-, insbesondere einer Pipettierstation wird eine definierte Menge aus jeweils einem Gefäß der Pigment-Dispersion entnommen. Um beim Ansaugen der Pigment-Dispersion zu vermeiden, daß Mahlkörper den Spritzeneingang verstopfen, wird eine Einwegspritze nur jeweils 2 bis 4 mm in den Mahlansatz eingetaucht. Die Eintauchtiefe wird dabei durch eine Entfernungsmessung durch Ultraschall gewährleistet. Die auf diese Weise in der Pipettierstation entnommene Pigment-Dispersion wird vorzugsweise gewogen und in einer weiteren bevorzugten Ausführungsform der Erfindung zur Herstellung von Pigment-Dispersionen mit einer definierten Menge Weiß-Paste homogen gemischt.

Die homogenisierten Pasten werden vorzugsweise mittels eines Roboters in eine Glasschale gegeben und die deckenden Schichten der Pasten mittels eines geeigneten Farbmetrik-Gerätes farbmetrisch vermessen. Dabei wird Licht mit einer Wellenlänge von 400 bis 700 nm in Form von "Lichtblitzen" unter einem Winkel von 45° jeweils im Abstand von 20 nm eingestrahlt. Der Meßfleck hat dabei in etwa einen Durchmesser von 3 cm.

Durch Mischen mit Weiß- und Schwarz-Paste werden in annähernd jeder schichtigen deckenden Formulierung der transparenten Pigment-Pasten. Auf diese Weise kann die Transparenz bestimmt werden.

Die Messung eines Remissionsspektrums erfolgt aus einer Entfernung von 0,1 bis 5 cm direkt auf die flüssige Paste. Die Auswertung erfolgt mittels einer geeigneten Farbmetrik-Software, um die farbmetrischen Kenngrößen dH, dL, dC, ddE, das Farbäquivalent FAE zu einer Vergleichsprobe und die Dispergierbarkeit zu bestimmen.

In einer weiteren bevorzugten Ausführungsform umfaßt die Auswerteeinheit (E) wenigstens einen Computer zur Datenerfassung und Datenauswertung. Es kann auch eine Dokumentiereinheit vorgesehen werden.

Vorzugsweise erfolgt die Anordnung der einzelnen Elemente bzw. Geräte der erfindungsgemäßen Vorrichtung zur automatisierten Herstellung und Charakterisierung von wenigstens einem flüssigen Mehrkomponentensystem aus wenigstens zwei, bevorzugt wenigstens drei Komponenten sowie die Durchführung des erfindungsgemäßen Verfahrens zur Herstellung dieses flüssigen Mehrkomponentensystems in der Weise, wie es in Fig. 1 gezeigt ist, das eine bevorzugte Vorrichtung zum automatischen Screening zeigt.

Wie in Fig. 1 gezeigt, werden vorzugsweise von einem Roboter (1), der sich bevorzugt auf einer Schiene befindet, zuerst aus einem Vorrat (2) Fläschchen entnommen, die dann vom Etikettierer (3) etikettiert werden, um von einem Barcodeleser (4) identifiziert werden zu können. Diese Fläschchen können bereits eine oder mehrere Komponenten enthalten oder leer sein, bevorzugt sind sie leer. Vorteilhafterweise sind sie nicht verschlossen. In das Fläschchen können dann über mehrere Dosierstationen (5), beispielsweise über 3 Dosierstationen wie in Fig. 1 gezeigt, Polymerschmelzen, heiße Schmelzen, z.B. Heißwachs; hochviskose Stoffe; Feststoffe wie z.B. Pulver, Granulate; flüssige Stoffe wie z.B. Öle, Wasser, Tenside, Lösungen, beispielsweise von Wirk- und Hilfsstoffen, Alkohole und/oder organische Lösungsmittel eindosiert werden. Die Vorlagen und Dosiereinheiten können beheizt werden. Es besteht auch die Möglichkeit, über eine Pipettierstation (6) eine oder mehrere Komponenten aus einem Vorratsgefäß (nicht gezeigt) zu entnehmen und in das Fläschchen zu pipettieren. Nach dem Zusammenbringen der Komponenten kann das Fläschchen mit der Probe bei Bedarf in einer Schließstation (7), insbesondere einer Schraubstation mit Deckelspender, verschlossen werden. Die Fläschchen können bei Bedarf vor dem Homogenisieren in der Temperierstation (8) erwärmt werden. Von hier aus wird das Fläschchen vom Roboter (1) zu den Homogenisiereinheiten (9) gebracht. Nach dem Homogenisieren werden die Fläschchen, wenn sie noch offen sind, in der Schließstation (7) verschlossen. Anschließend kann das Fläschchen mit der Probe zu der Temperierstation (8) oder einer Abkühlstation (10), vorzugsweise mit integriertem Horizontalschüttler und Gebläse, oder zu beiden Stationen nacheinander gelangen. Von hier aus oder falls keine Temperierungen oder Abkühlungen durchgeführt werden, übergibt der Roboter (1) das Fläschchen mit der Probe an die Screening- oder Meßstation (11). In dieser werden die Fläschchen, falls erforderlich, an der Schraubstation (12) geöffnet und mittels einer oder mehrerer der obengenannten Meßgeräte vermessen. In Fig. 1 sind 3 Meßgeräte (13) symbolisch dargestellt, von denen eines oder mehrere angewandt werden können. In der Screeningstation (11) ist auch Lagerplatz (14) für Proben zur Lagerung vorhanden. Die Proben können somit auch wiederholt in bestimmten zeitlichen Abständen vermessen werden. Dabei können die Proben auch aus der gesamten, in Fig. 1 gezeigten Anlage herausgenommen und zu einem beliebigen späteren Zeitpunkt bei Vorrat (2) und/oder Lagerplatz (14) oder der Abkühlstation (10) und/oder der Temperierstation (8) wieder in die Anlage gestellt werden, um danach erneut behandelt bzw. untersucht zu werden. Die Proben können zu diesem Zweck über ihren Barcode eindeutig identifiziert werden. Nach Auswertung der Ergebnisse können die Proben nach Qualitätsmerkmalen sortiert werden, wobei schlechte Proben in der Screeningstation (11) als Abfall (15) als auch außerhalb davon, beispielsweise bereits nach der Homogenisierung als Abfall (16), verworfen werden können. Bei dem gesamten Ablauf wird das Fläschchen vom Roboter (1) jeweils zur gewünschten Stelle gebracht. Es besteht auch die Möglichkeit, daß innerhalb der Screeningstation (11) Proben unabhängig von Roboter (1) zu der gewünschten Stelle gebracht werden, z.B. mit Hilfe eines weiteren Roboters. Damit können Proben unabhängig voneinander parallel hergestellt und vermessen werden. Die so hergestellten und vermessenen Proben können nach diesem Ablauf außerhalb der Screeningstation (11), beispielsweise in der Temperierstation (8), gelagert werden, um danach erneut vermessen zu werden. Die Proben können auch in andere Gefäße, in denen sich bereits Lösungen oder Lösungsmittel, z.B. Wasser, befinden, pipettiert werden (über Pipettierstation (6)). Die so hergestellten "Tochter-"Proben können dann erneut bei Bedarf homogenisiert und/oder temperiert und anschließend in der Screeningstation (11) vermessen werden.

Außerdem umfaßt die vorliegende Erfindung die Verwendung des erfindungsgemäßen Verfahrens bzw. der erfindungsgemäßen Vorrichtung zur automatisierten Herstellung und Charakterisierung wenigstens eines flüssigen Mehrkomponentensystems aus wenigstens zwei, bevorzugt wenigstens drei Komponenten.

In einer bevorzugten Ausführungsform der vorliegenden Erfindung umfaßt die vorliegende Erfindung die Verwendung des erfindungsgemäßen Verfahrens bzw. der erfindungsgemäßen Vorrichtung zur automatisierten Formulierung und automatisierten Charakterisierung mindestens eines Pigments, insbesondere zur simultanen automatisierten Formulierung und automatisierten Charakterisierung einer Mehrzahl von Pigmentformulierungen.

Die Erfindung eignet sich besonders gut zur Entwicklung neuer flüssiger Mehrkomponentensysteme, insbesondere Leimungsmitteldispersionen und Entschäumeremulsionen für die Papierherstellung; in der Waschmittelindustrie zum Screening von Hydrotropen (Löslichkeitsvermittler) für die Herstellung leicht löslicher Waschmitteltabletten/-kompaktate und hochkonzentrierter Flüssigformulierungen sowie homogen klar löslicher saurer oder alkalischer Reiniger; aber auch für die Entwicklung von Mikroemulsionen; zur Entwicklung von kosmetischen Formulierungen wie z.B. Cremes, Lotionen, Shampoos, Haarconditioner, Rasierwässer, Deoformulierungen; für flüssige Vitaminformulierungen, Nahrungsmittelformulierungen, Wirkstoffformulierungen aus Pflanzenschutz und Pharmazie; zur Entwicklung von Hydrophobiermittelemulsionen, z.B. für Leder oder Textil; zur Entwicklung von Farben und Lacken auf Lösemittel- oder Wasserbasis; und zur Entwicklung von Inkjet-Tinten. Die Erfindung eignet sich allgemein zur Entwicklung kolloidaler und disperser Formulierungen sowie von Lösungen oder flüssigen Mehrphasensystemen. Die Erfindung eignet sich weiterhin zur Entwicklung von Additiven und Hilfsstoffen für Formulierungen, beispielsweise auch zur Entwicklung neuer Tenside und Spezialtenside z.B. für die oben genannten Formulierungen.

Die vorliegende Erfindung ermöglicht es, in kurzer Zeit eine große Anzahl von Flüssigformulierungen herzustellen und zu charakterisieren. Mittels eines intelligenten Softwareprogramms kann das Screening mehrerer Proben zeitlich optimiert werden, indem die Schritte (a) bis (c) an verschiedenen Proben parallel durchgeführt werden. Das heißt, während z.B. an Probe 1 eine Messung durchgeführt wird, wird Probe 2 inzwischen homogenisiert, während in das Gefäß der Probe 3 gleichzeitig die Formulierungskomponenten dosiert werden. Weiterhin ermöglicht es die Software, daß eine Probe, die ursprünglich mit mehreren Meßgeräten untersucht werden soll, nicht weiter untersucht wird, sobald ein Meßwert die Probe als ungeeignet charakterisiert. Wird also beispielsweise eine Probe, die homogen sein soll, vom Bildanalysesystem als inhomogen charakterisiert, dann ist es möglich, an dieser Probe keine weitere Messung mehr durchführen zu lassen, z.B. keine anschließende Viskositätsmessung. Dadurch wird das Probenscreening verkürzt. Mit der Erfindung kann beispielsweise das Verhalten neuer Additive und handelsüblicher Tenside und Emulgatoren oder Hilfsstoffe in Flüssigformulierungen bei gleichzeitiger Variation der Formulierungszusammensetzung schnell untersucht werden und auf diese Weise können Flüssigformulierungen effizient und zuverlässig optimiert werden. Während bei der bisher üblichen Vorgehensweise 10 bis 20 Formulierungen pro Tag von einer Person hergestellt und untersucht werden konnten, ist es mittels der Erfindung möglich, daß eine Person mindestens 100 Proben pro Tag herstellt und charakterisiert, wobei gleichzeitig eine Lagerung von Formulierungen möglich ist. Dies belegt eindrucksvoll die Wirtschaftlichkeit und den Nutzen der vorliegenden Erfindung.

Eine bevorzugte Ausführungsform der vorliegenden Erfindung, die Bereitstellung eines Verfahrens und einer Vorrichtung zur Herstellung und Charakterisierung von Pigment-Dispersionen ermöglicht es, gleichzeitig eine Mehrzahl verschiedener Dispersionen zu formulieren und diese ohne große Zeitverzögerung direkt im Anschluß daran zu charakterisieren. Eine Applikation der verschiedenen Pigment-Dispersionen auf geeignete Trägermaterialien ist dabei nicht mehr nötig, sondern die anwendungstechnischen Eigenschaften, insbesondere die der Coloristik und Rheologie, können unmittelbar in denen die dispergierten Pigmente enthaltenden fluiden Medien automatisiert erfaßt werden. Eingesetzt werden können dabei neben den klassischen nicht-pigmentierten wässrigen und lösungsmittelhaltigen Lacksystemen Lösungsmittel, Öle oder Wachse.

Während man bei der bisher üblichen zumindest teilweisen manuellen Vorgehensweise bezüglich der Formulierung und Charakterisierung von Pigment-Dispersionen lediglich ca. 10 Pigment-Dispersionen pro Tag untersuchen konnte, ist es mittels der vorliegenden Erfindung möglich, etwa 90 bis 100 Pigment-Dispersionen pro Tag zu analysieren.

Die Erfindung wird anhand der folgenden Beispiele näher erläutert, die bevorzugte Ausführungsformen darstellen, ohne die Erfindung zu beschränken. Die Beispiele zeigen eine typische Vorgehensweise beim Screening von Emulsionen (Beispiel 3) und Dispersionen (Beispiel 1) sowie von Pflanzenschutzformulierungen (Beispiel 2) und einem Solubilisat (Beispiel 4).

### Beispiel 1

### Screening von Dispersionen

Eine Flasche mit 10 oder 50 ml Fassungsvermögen wird aus dem Vorrat entnommen, etikettiert und der Barcode gelesen. Anschließend werden dünnflüssige oder viskose Tenside und/oder Dispergiermittel und/oder organische Lösungen eindosiert. Sodann werden in der angegebenen Reihenfolge bei 70°C Schutzkolloide, bei 70°C Wasser und bei 80°C Wachsschmelze zudosiert. Nach 5minütigem Heizen wird für 1 bis 10 min. im Ultraschallgerät mit einer 1-12mm Sonotrode dispergiert. Die Sonotrode wird unter heißem Wasser und Ultraschall gereinigt. Danach wird die Flasche mit einem Deckel zugeschraubt und die Probe wird 15 bis 30 min. auf dem Rütteltisch auf Raumtemperatur abgekühlt. Anschließend werden die Proben an die Screeningstation übergeben, in der sie auf Homogenität mittels eines Bildanalysegeräts und Viskosität überprüft werden. Danach werden die Proben gelagert. Alle Vorgänge werden automatisiert durchgeführt.

### Beispiel 2

### Screening von Pflanzenschutzformulierungen

Eine Flasche mit 10 ml Fassungsvermögen wird von einem Roboter dem Vorrat entnommen. Der Barcode wird vom Etikettierautomaten aufgeklebt und der Barcode anschließend gelesen. Dann werden an den Dosierstationen nacheinander 3 ml Wasser und 3 ml Ölsäuremethylester, der ein Herbizid zu 25 Gew.-% gelöst enthält, zudosiert. Anschließend werden an der Pipettierstation zwei flüssige Tenside zu je 0,1 bis 1,0 g zupipettiert. Dann wird die Flasche mit einem Schraubdeckel verschlossen und der Inhalt von einem Rüttler homogenisiert. Danach wird die Flasche an die Screeningstation übergeben. Nach 1 Stunde wird die Probe mittels Bildanalyse auf Homogenität geprüft. Ist die Probe homogen und zeigt sie weder Auftrenn-Sedimentations- noch Aufrahmungstendenzen, dann wird diese Probe A aufgeschraubt und zusammen mit einem neuen Gefäß für Probe B, welches 30 g Wasser enthält, vom Roboter zum Pipettierautomaten gebracht. Dort werden der Probe A 0,6 g entnommen und in das Gefäß der Probe B pipettiert. Dann wird dieses Gefäß verschlossen, der Inhalt (Probe B) geschüttelt und vom Roboter der Screeningstation übergeben. Dort wird in im Verfahrensablauf zeitlich definierten Abständen die wäßrige, verdünnte Probe B mittels Transmissionsmessung auf Homogenität untersucht. Nach vorgegebenen zeitlichen Stabilitätskriterien werden homogene und inhomogene Proben B im Probenrack der Screeningstation sortiert. Wahlweise können die zeitlich inhomogenen Proben B auch verworfen werden, wodurch bedarfsweise Platz für weitere Proben entsteht. Alle Vorgänge werden automatisiert durchgeführt. Auf diese Weise können verschiedene Wirkstoffe und/oder Hilfsstoffe schnell und effizient gescreent werden.

### Beispiel 3

### Screening von Emulsionen

Eine Flasche mit 50 ml Fassungsvermögen wird aus dem Vorrat entnommen, etikettiert und der Barcode wird gelesen. Anschließend werden Öle zudosiert und Emulgatoren/Tenside zudosiert. Die Probe wird mit dem Mischer homogenisiert. Anschließend werden Wasser und gegebenenfalls weitere Tenside zudosiert. Die Probe wird verschlossen, das Gemisch wird auf 80°C erwärmt, die Flasche wird geöffnet und es wird für 1 bis 10 min. im Ultraschallgerät mit einer 1-12 mm Sonotrode dispergiert. Danach wird die Flasche zugeschraubt, die Probe auf dem Rütteltisch abgekühlt und anschließend an die Screeningstation übergeben. Dort werden Homogenität und Viskosität bestimmt. Anschließend wird die Probe 2 Stunden bei 60°C in der Temperierstation gelagert und erneut zu den Messungen an die Screeningstation übergeben. Anschließend werden die inhomogenen Proben verworfen und die stabilen Proben weiter gelagert. Alle Vorgänge werden automatisiert durchgeführt.

### Beispiel 4

### Screening von Solubilisaten

Eine Flasche mit 50 ml Fassungsvermögen wird aus dem Vorrat entnommen, etikettiert und der Barcode wird gelesen. Anschließend werden Öle zudosiert und Solubilisatoren zupipettiert. Die Probe wird mit dem Mischer homogenisiert. Anschließend wird auf 80°C erwärmt, auf 70°C erwärmtes Wasser wird zudosiert. Das Gemisch wird mit dem Mischer homogenisiert, auf dem Rütteltisch abgekühlt und anschließend an die Screeningstation übergeben. Dort wird die Homogenität und die Trübung der Probe gemessen. Alle Vorgänge werden automatisiert durchgeführt, wobei die Flasche an den entsprechenden Stellen automatisiert geöffnet bzw. geschlossen wird. Somit können verschiedene Solubilisatoren schnell gescreent werden.

### Beispiel 5

### Herstellung und Charakterisierung von Pigmentdispersionen

Eine 100 ml Glasflasche wird mit einem Barcode versehen. Anschließend werden 1.5 g einer pulverförmigen Pigmentpräparation, 20 g Glaskugeln (3mm Durchmesser) und 15 g eines nicht pigmentiereten Lackes eingewogen. Mehrere derartig befüllte Flaschen werden im Dispergieraggregat gleichzeitig dispergiert. Die Flaschen werden nach 15-minütiger Dispergierung aus dem Dispergieraggregat genommen und einzeln weiter verarbeitet. Eine Flasche wird zunächst aufgeschraubt. Mit einer 20 ml Einwegspritze werden 1.5 g der bunten Pigmentdispersion mit 2.0 g einer 20%igen TiO₂-Dispersion in einer 20 ml Flasche eingewogen. Durch Schütteln wird der Inhalt der verschlossenen 20 ml Flasche homogenisiert. Nach erfolgter Homogenisierung (3 Minuten) wird der Inhalt dieser Flasche in eine Petrischale gegossen und ein Remissionsspektrum der Dispersion aufgenommen. Die 100 ml Flaschen werden wieder verschlossen und weitere 2 Stunden dispergiert. Es wird die Mischung der Buntpigmentdispersion mit der TiO₂-Dispersion wiederholt und erneut ein Remissionsspektrum aufgenommen. Alle Vorgänge laufen automatisiert ab.

## Patentansprüche

1. Verfahren zur automatisierten Herstellung und Charakterisierung wenigstens einer Pigment-Dispersion aus wenigstens zwei Komponenten, wobei des Verfahren wenigstens folgende Schritte umfaßt:
(a) automatisiertes Herstellen eines Gemisches durch automatisiertes Einwiegen mindestens eines Pigments und von mindestens einem Lack in mindestens ein Gefäß;
(b) automatisiertes Homogenisieren des in Schritt (a) erhaltenen Gemisches durch automatisiertes Schütteln unter Erhalt der Pigment-Dispersion;
(c) automatisiertes Auswerten durch farbmetrisches Vermessen der Pigment-Dispersion,
wobei zusätzlich die folgenden Schritte durchgeführt werden:
- automatisiertes Schließen vor dem automatisierten Schütteln in Schritt (b),
- automatisiertes Öffnen des mindestens einen Gefäßes und automatisiertes Entnehmen einer definierten Menge der Pigment-Dispersion vor dem automatisierten Vermessen in Schritt (c),
- gegebenenfalls automatisiertes homogenes Mischen der definierten Menge der Pigment-Dispersion mit einer Weiß-/Schwarz-Paste.

2. Verfahren nach Anspruch 1, **dadurch gekennzeichnet, daß** in Schritt (a) ein oder mehrere Mahlkörper eingewogen werden.

3. Verfahren nach Anspruch 1 oder 2, **dadurch gekennzeichnet, daß** in Schritt (a) ein oder mehrere Additive eingewogen werden.

4. Verfahren nach einem der Ansprüche 1 bis 3, **dadurch gekennzeichnet, daß** das farbmetrische Vermessen in Schritt (c) durch Aufnehmen mindestens eines Remissionsspektrums oder einer Aufnahme mit einer CCD-Kamera erfolgt.

5. Verfahren nach einem der Ansprüche 1 bis 4, **dadurch gekennzeichnet, daß** in Schritt (a) das Gefäß leer vorliegt und wenigstens eine Komponente in einer definierten Menge automatisiert aus einem Vorratsbehälter in das Gefäß pipettiert oder dosiert wird.

6. Verfahren nach einem der Ansprüche 1 bis 5, **dadurch gekennzeichnet, daß** das Auswerten in Schritt (c) mittels einer geeigneten Software erfolgt.

7. Verfahren nach einem der Ansprüche 1 bis 6, **dadurch gekennzeichnet, daß** nach Schritt (b) und vor Schritt (c) das flüssige Mehrkomponentensystem automatisiert temperiert und/oder abgekühlt wird, gegegebenenfalls unter gleichzeitigem Vermischen.

8. Vorrichtung zur automatisierten Herstellung und Charakterisierung von wenigstens einer Pigment-Dispersion aus wenigstens zwei Komponenten, wobei die Vorrichtung wenigstens folgende Elemente aufweist:
(A) eine Dosierstation (5);
(B) eine Schließstation (7);
(C) eine Homogenisierstation (9);
(D) ein Farbmetrikgerät (11) und
(E) eine Auswerteeinheit,
wobei die Vorrichtung zusätzlich wenigstens die folgenden Elemente aufweist:
- eine Einwiegestation, die der Dosierstation (A) vorgeschaltet ist,
- eine Dispergierstation, die der Schließstation (B) nachgeschaltet ist,
- eine Entnahme-, insbesondere eine Pipettierstation, die der Dispergierstation nachgeschaltet ist,
- eine weitere Schließstation (7), die der Entnahmestation nachgeschaltet ist, und die Automatisierung mittels eines Roboters erfolgt. :

9. Vorrichtung nach Anspruch 8, **dadurch gekennzeichnet, daß** die Vorrichtung noch mindestens eines der folgenden Elemente aufweist:
- eine Dosierstation für Mahlkörper,
- eine Dosierstation für feste und/oder flüssige Additive,
- einen Roboter,
- eine Dosierstation für Weiß-/Schwarz-Pasten.

10. Vorrichtung nach einem der Ansprüche 8 oder 9, **dadurch gekennzeichnet, daß** die Auswerteeinheit (E) wenigstens einen Computer zur Datenerfassung und Datenauswertung umfaßt.

11. Verwendung des Verfahrens nach einem der Ansprüche 1 bis 7 oder der V orrichtung nach einem der Ansprüche 8 bis 10 zur automatisierten Herstellung und Charakterisierung wenigstens einer Pigment-Dispersion aus wenigstens zwei Komponenten.

## Claims

1. A method of automatedly preparing and characterizing at least one pigment dispersion comprising at least two components, said method comprising at least the following steps:
(a) automated preparation of a mixture by automated weighed introduction of at least one pigment and at least one varnish into at least one vessel;
(b) automated homogenization of the mixture obtained in step (a) by automated shaking to give the pigment dispersion;
(c) automated evaluation by colorimetric measurement of the pigment dispersion,
and the following steps being carried out in addition:
- automated closing before the automated shaking in step (b),
- automated opening of said at least one vessel and automated withdrawal of a defined amount of the pigment dispersion prior to the automated measurement in step (c),
- where appropriate, automated homogeneous mixing of the defined amount of the pigment dispersion with a white/black paste.

2. A method as claimed in claim 1, wherein one or more grinding media are weighed in in step (a).

3. A method as claimed in claim 1 or 2, wherein one or more additives are weighed in in step (a).

4. A method as claimed in any of claims 1 to 3, wherein the colorimetric measurement in step (c) takes place by recording at least one reflection spectrum or recording with a CCD camera.

5. A method as claimed in any of claims 1 to 4, wherein in step (a) the vessel is empty and at least one component is metered or pipetted in a defined amount, automatedly, from a stock container into the vessel.

6. A method as claimed in any of claims 1 to 5, wherein the evaluation in step (c) takes place by means of appropriate software.

7. A method as claimed in any of claims 1 to 6, wherein after step (b) and before step (c) the liquid multicomponent system is heated and/or cooled in an automated fashion, with or without simultaneous mixing.

8. Apparatus for automatedly preparing and characterizing at least one pigment dispersion comprising at least two components, said apparatus comprising at least the following elements:
(A) a metering station (5);
(B) a closing station (7);
(C) a homogenizing station (9);
(D) a colorimeter (11), and
(E) an evaluating unit, said apparatus further comprising at least the following elements:
- a weighing station upstream of the metering station (A),
- a dispersing station downstream of the closing station (B),
- a withdrawing station, in particular a pipetting station, downstream of the dispersing station,
- a further closing station (7) downstream of the withdrawing station,
and the automation is carried out by means of a robot.

9. Apparatus as claimed in claim 8, further comprising at least one of the following elements:
- a metering station for grinding media,
- a metering station for solid and/or liquid additives,
- a robot,
- a metering station for white/black pastes.

10. Apparatus as claimed in either of claims 8 and 9, wherein the evaluating unit (E) comprises at least one computer for data capture and data evaluation.

11. The use of a method as claimed in any of claims 1 to 7 or apparatus as claimed in any of claims 8 to 10 for automatedly preparing and characterizing at least one pigment dispersion comprising at least two components.

## Revendications

1. Procédé pour la préparation et la caractérisation automatisée d'au moins une dispersion de pigments constituée d'au moins deux composants, le procédé comprenant au moins les étapes suivantes :
(a) préparation automatisée d'un mélange par une pesée automatisée d'au moins un pigment et d'au moins une laque dans au moins un récipient ;
(b) homogénéisation automatisée du mélange obtenu dans l'étape (a) par une agitation automatisée, ce qui permet d'obtenir la dispersion de pigment ;
(c) analyse automatisée par mesure colorimétrique de la dispersion de pigment,
les étapes suivantes étant réalisées en plus :
- fermeture automatisée avant l'agitation automatisée dans l'étape (b)
- ouverture automatisée dudit au moins un récipient et prélèvement automatisé d'une quantité définie de la dispersion de pigment avant la mesure automatisée dans l'étape (c),
- le cas échéant mélange homogène automatisé de la quantité définie de la dispersion de pigment avec une pâte blanche/noire.

2. Procédé selon la revendication 1, **caractérisé en ce qu'**on introduit en pesant un ou plusieurs corps de broyage dans l'étape (a).

3. Procédé selon la revendication 1 ou 2, **caractérisé en ce qu'**on introduit en pesant un ou plusieurs additifs dans l'étape (a).

4. Procédé selon l'une quelconque des revendications 1 à 3, **caractérisé en ce que** la mesure colorimétrique dans l'étape (c) est réalisée en enregistrant au moins un spectre de réflectance ou un cliché avec une caméra CCD.

5. Procédé selon l'une quelconque des revendications 1 à 4, **caractérisé en ce que** dans l'étape (a), le récipient disposé au préalable est vide et au moins un composé est pipeté ou dosé en une quantité définie de manière automatisée à partir d'un réservoir dans le récipient.

6. Procédé selon l'une quelconque des revendications 1 à 5, **caractérisé en ce que** l'analyse dans l'étape (c) est réalisée au moyen d'un logiciel approprié.

7. Procédé selon l'une quelconque des revendications 1 à 6, **caractérisé en ce que** le système liquide à plusieurs composants est thermostaté et/ou refroidi de manière automatisée après l'étape (b) et avant l'étape (c), le cas échéant en mélangeant simultanément.

8. Dispositif pour la préparation et la caractérisation automatisée, d'au moins une dispersion de pigments constituée d'au moins deux composants, le dispositif présentant au moins les éléments suivants :
(A) un poste de dosage (5) ;
(B) un poste de fermeture (7);
(C) un poste d'homogénéisation (9);
(D) un appareil colorimétrique (11) et
(E) une unité d'analyse,
le dispositif présentant en outre au moins les éléments suivants :
- un poste de pesée, en amont du poste de dosage (A),
- un poste de dispersion, en aval du poste de fermeture (B),
- un poste de prélèvement, en particulier un poste de pipetage, en aval du poste de dispersion,
- un autre poste de fermeture (7) en aval du poste de prélèvement et réalisant l'automatisation au moyen d'un robot

9. Dispositif selon la revendication 8, **caractérisé en ce que** le dispositif présente au moins encore un des éléments suivants :
- un poste de dosage pour des corps de broyage,
- un poste de dosage pour des additifs solides et/ou liquides
- un robot
- un poste de dosage pour des pâtes blanches/noires.

10. Dispositif selon l'une quelconque des revendications 8 ou 9, **caractérisé en ce que** l'unité d'analyse (E) comprend au moins un ordinateur pour enregistrer et analyser les données.

11. Utilisation du procédé selon l'une quelconque des revendications 1 à 7 ou du dispositif selon l'une quelconque des revendications 8 à 10 pour la préparation et la caractérisation automatisée d'au moins une dispersion de pigments, constituée d'au moins deux composants.
